# EUROPEAN PATENT SPECIFICATION

(11) **EP 3 878 899 B1**
(45) Date of publication and mention of the grant of the patent: **31.05.2023**
(21) Application number: 19884606.5
(22) Date of filing: 08.03.2019
(51) Int. Cl.: C08L 9/08, C08L 75/04, B01J 3/00, C08J 9/36

(54) **METHOD FOR USING SUPER/SUBCRITICAL FLUID TO REMOVE VOLATILE COMPOUNDS FROM FOAM**
VERFAHREN ZUR VERWENDUNG EINES SUPER-/SUBKRITISCHEN FLUIDS ZUR ENTFERNUNG VON FLÜCHTIGEN VERBINDUNGEN AUS SCHAUM
PROCÉDÉ D'UTILISATION D'UN FLUIDE SUPER/SOUS-CRITIQUE POUR ÉLIMINER DES COMPOSÉS VOLATILS D'UNE MOUSSE

(30) Priority: 16.11.2018 CN 201811368036
(43) Date of publication of application: 15.09.2021
(73) Proprietor: Zhejiang University, Hangzhou, Zhejiang 310058 (CN)
(72) Inventor: REN, Qilong, Hangzhou, Zhejiang 310027 (CN); BAO, Zongbi, Hangzhou, Zhejiang 310027 (CN); CHEN, Fuqiang, Hangzhou, Zhejiang 310027 (CN); ZHANG, Zhiguo, Hangzhou, Zhejiang 310027 (CN); CHEN, Min, Hangzhou, Zhejiang 310027 (CN); YANG, Yiwen, Hangzhou, Zhejiang 310027 (CN); YANG, Qiwei, Hangzhou, Zhejiang 310027 (CN)
(74) Representative: Chung, Hoi Kan
(86) International application number: PCT/CN2019/077409
(87) International publication number: WO 2020/098184

(56) References cited:
- CN-A- 1 909 955
- CN-A- 101 255 087
- CN-A- 103 845 921
- CN-A- 108 690 310
- US-A1- 2004 055 621

## Description

### TECHNICAL FIELD

The disclosure relates to the technical field of treatment of volatile organic compounds, in particular to a method for removing volatile organic compounds from sponges by using subcritical fluid.

### BACKGROUND

In recent years, with the improvement of the living standard, people are increasingly pursuing the quality of life. Due to the excellent characteristics of high resilience, good air permeability, light weight and comfortable texture, the sponge product is popular among people. The sponge is mainly classified into rubber sponge (latex sponge), polyurethane foam (polyether and polyester sponge) and polyvinyl alcohol sponge based on different synthetic raw materials. The latex sponge and the polyurethane foam are most widely used.

Latex sponge has become a hot-sale product in recent years, because of good air permeability, antibacterial, anti-mite and sleep promotion. However, the yield of natural latex is low, and each rubber tree can only produce 30 cc latex juice per day on average. In order to meet the market demand, natural rubber and synthetic styrene-butadiene rubber are usually blended to produce the product, in which the synthetic styrene-butadiene rubber is obtained by copolymerizing 1, 3-butadiene and styrene. The latex sponge has a plurality of air holes due to the formation by evaporation molding. There are abundant residual unreacted volatile organic compounds after processing technologies such as foaming and vulcanizing. Consequently, the sponge will have a peculiar smell and can be possibly harmful to human body by inhalation, ingestion or percutaneous absorption.

Polyurethane foams are widely used as cushions, mattresses, clothes linings, filters, sound-absorbing, dust-absorbing, shockproof and packaging materials due to their good performance of cold resistance, shockproof, sound-absorbing, dust-absorbing and so on. Polyurethane foam is formed through foaming, vulcanization and other processing processes from a cross-linked sponge that was obtained by the reaction of isocyanate and polyether/polyester polyol. During preparation process, only a few amine catalysts used in the foaming reaction volatilized in the reaction process, and most of them remained in the well-developed cell structure of sponge. Besides, the residual olefins, aromatic hydrocarbons and aldehydes will not only cause a peculiar smell, but also can be harmful to a human body through inhalation, ingestion or percutaneous absorption. Therefore, the devolatilization of sponges become an indispensable step in the post-treatment process.

At present, steam-stripping method, post-polymerization method and steam-stripping-post-polymerization method are commonly used for removing volatile organic compounds from polymeric latex at home and abroad. As the main technology, the key point of steam-stripping method is that the steam should be introduced under vacuum conditions to take out the residual monomers. The efficiency of removing monomers largely depends on the contact area between steam and latex. The German patent (DE 2717996) sprays polymer latex together with steam into a container to increase the monomers removal efficiency. The United States patent (US4130527) and the Japanese patent (JP 09220402) each reported an improved stripper that increases the monomers removal efficiency by increasing the contact areas between the steam and the latex. After years of development, there are still many problems of steam-stripping method such as high equipment investment, large energy consumption, and the decline of stability and quality of latex products due to long-time introducing of steam. Post-polymerization method is to add high effective initiator after main polymerization of monomers to continue the polymerization so that the remaining monomers can be converted completely. The United States patent (US 4301264) reported that after the emulsion polymerization reached a certain extent, a second initiator was added to continue polymerization under certain conditions, so that the amounts of residual monomers were reduced to less than 0.1%. The post-polymerization method requires both high activity and selectivity for the initiator. Steam-stripping-post-polymerization method combines the advantages of steam-stripping method and post-polymerization method to improve monomers removal efficiency, while this method is relatively complex. The United States patent (US 4529573) reported the steam-stripping-post-polymerization method, in which initiator was continuously added while stripping, and the amount added per hour was 0.01% of the latex until the contents of residual monomer were reduced to 0.05%.

In June 2014, the European Union promulgated the resolution 2014/391/EU, which stipulated the residual content of styrene and 4-vinylcyclohexene in latex sponge: 1,3-butadiene < 1 µg/m³, styrene < 10 µg/m³, 4-vinylcyclohexene < 2 µg/m³, and the residual release of 2,4-toluenediamine and 4,4'-diaminodiphenylmethane in polyurethane foam: 2,4-toluenediamine < 5 ppm, 4,4'-diaminodiphenylmethane < 5 ppm. In addition, there are solvent residues such as formaldehyde, benzene, toluene and xylene in the production process of sponge products. The EU standard stipulates that the contents of the total volatile organic compounds are less than 500 µg/m³, and the national standard GB 18584.3 requires the contents of the total volatile organic compounds are less than 600 µg/m³. However, domestic companies have not yet formed an efficient means for removing harmful volatile organic compounds in sponges, and there is no report on the super/subcritical fluid devolatilization methods of volatile organic compounds in sponges.

Chinese patent publication No. 108 690 310 A discloses a method of preparing a low VOC foam comprising placing a molded polymer in an extraction tank, feeding supercritical CO₂, performing extraction, rapidly releasing the pressure and repeating the inj ection/pressure release process four times or twice. The volatile matter decreases to 0.02% after purification.

### SUMMARY

The disclosure provides a method for removing volatile organic compounds by using subcritical fluid. The subcritical fluid is adopted to remove residual volatile organic compounds in the sponge, thus obtaining the qualified sponge. The method has the advantages of environmentally friendly, high efficiency, low cost and easy for industrial application.

A method for removing volatile organic compounds from sponges with subcritical fluids includes the following steps:

Placing the sponge block to be processed in the extraction kettle; Feeding the critical flow medium into the extraction kettle; Performing extraction under the subcritical conditions of the critical flow medium; Releasing pressure to normal pressure (atmosphere pressure) after the extraction; Separating the sponge and the flow medium to obtain the devolatilized sponge.

The devolatilization device used in the disclosure is a supercritical extraction kettle, which can adopt static extraction or dynamic extraction or a combination thereof. The pressure of CO₂ in the separating kettle releases after contacting the sponge to be treated in the supercritical extraction kettle for a certain period of time, when the static extraction devolatilization is carried out. CO₂ passes through the devolatilization device or the extraction device at a certain flow rate to make volatile organic compound in sponge discharged along with CO₂, when the dynamic extraction devolatilization is carried out.

The application of subcritical fluid to devolatilization has good selectivity. The density and solubility of the fluid can be adjusted by changing the temperature and pressure to achieve the dissolution and removal of the target impurities. The subcritical fluid have unique physical and chemical properties: (1) the density is similar to that of liquids, which enhances their ability to dissolve many compounds and can be effectively controlled; (2) the transfer property is similar to that of gas, and the surface tension is zero, so that the mass transfer property of the high-viscosity substances can be enhanced. CO₂ is an environmentally friendly gas with mild critical properties (critical temperature is 304 K, critical pressure is 7.39 MPa) and is non-toxic, cheap, non-flammable and inert. The solvent and solute are easy to be separated, so that the product has no residual solvent. At the same time, CO₂ can be recycled to reduce the impact on the health of operators and pollution to the environment, which is the preferred supercritical medium.

Thus, preferably, the fluid medium may be a pure or modified carbon dioxide.

Using pure or modified subcritical carbon dioxide as the medium, based on the high dissolving capacity and diffusivity of the carbon dioxide in supercritical conditions, the sponges to be treated are fully contacted with the subcritical carbon dioxide in the extraction device. The subcritical carbon dioxide diffuses and permeates into the sponge pore channel and dissolves the volatile organic compounds on the surface of the pore channel. Then the subcritical carbon dioxide with dissolved volatile organic compounds flows out of the extraction device, and the pressure of which releases in the separation kettle at a certain temperature, making the subcritical carbon dioxide and the volatile organic compounds separated. The separated carbon dioxide fluid can be recycled. In the devolatilization process, fresh subcritical carbon dioxide fluid is continuously supplemented into the extraction kettle to remove volatile organic compounds. After a period of extraction treatment, the volatile organic compounds in the sponge are completely removed.

It is further preferable that the modified subcritical carbon dioxide is formed by adding a modifier to pure subcritical carbon dioxide in a proportion.

More preferably, the modifier is ethanol or isopropanol.

More preferably, the modifier is added in an amount of 0.5 to 20 wt.% of the mass of pure subcritical carbon dioxide.

That is, the modified subcritical fluid is the mixture of the modifier and CO₂. The proportion of the modifier is small, and the main part is carbon dioxide. The addition of the modifier can increase the polarity of the fluid and enhance the solubility.

Subcritical conditions refer to operating temperatures and pressures slightly below the critical temperature (31.1 °C) and critical pressure (7.39 MPa) of carbon dioxide.

Thus, the subcritical conditions are: 20 °C ≤ temperature <31.1 °C, 3 MPa ≤ pressure < 7.39 MPa.

The devolatilization process in the disclosure needs to be controlled under subcritical conditions, that is, the temperature and pressure are controlled to be the near-critical temperature and pressure conditions of CO₂.

The operating conditions are relatively mild, the energy consumption of the production process is low, which is conducive to controlling production costs.

Preferably, the extraction time is 5-30 min.

Preferably, the sponge to be treated includes, but not limited to, latex sponge or polyurethane foam or polyvinyl alcohol sponge.

Volatile organic compounds in the latex mattress include, but not limited to, styrene, 1,3-butadiene, 4-vinylcyclohexene, etc. The volatile organic compounds in the latex sponge in the polyurethane foam include, but not limited to, 2,4-toluenediamine, 4,4'-diaminodiphenylmethane, etc.

When the extraction operation is carried out in the supercritical extraction equipment, the extraction time can be determined according to the content of volatile organic compounds in the sponge to be treated and the quality standard of the sponge to be met, and the extraction time depends on the flow rate of the supercritical fluid.

The carbon dioxide gas separated from the sponge is returned to the extraction kettle for cyclic utilization, and the volatile organic compound content can be analyzed and determined by HS-GC-MS or environmental chamber method.

Compared with the prior art, the method is adopted to carry out subcritical fluid devolatilization on volatile organic compounds in the sponge, and the technical effects of the method are mainly embodied in the following two aspects:
(1) Dissolving the subcritical fluid in the polymer to properly swell the polymer and promoting the outward diffusion rate of volatile organic compounds, which can greatly raise devolatilization efficiency. However, the present devolatilization methods, such as steam-stripping, post-polymerization and steam-stripping-post-polymerization, cannot effectively enhance the diffusion of volatile organic compounds in the sponge, and have low efficiency and high operating temperature. These current devolatilization methods are easy to deform the sponge material and make it difficult to rebound.
(2) Subcritical devolatilization not only can greatly improve the devolatilization efficiency, but also significantly reduce the content of volatile organic compounds in the sponge. The removal rate of volatile organic compounds is up to 99%. And there is no toxic and harmful solvent residue after extraction.

### BRIEF DESCRIPTION OF THE DRAWINGS

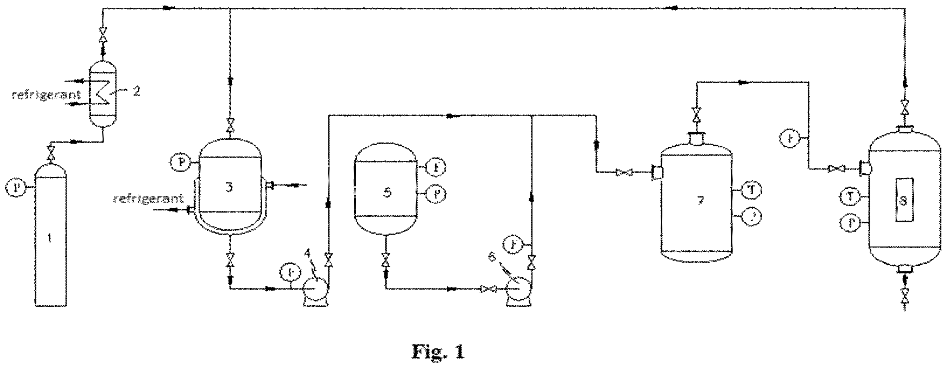

Fig. 1 illustrates a process flow diagram of the present disclosure.

The reference characters in the drawing:
1-carbon dioxide storage tank; 2-condenser; 3-carbon dioxide intermediate storage tank; 4-CO₂ pump; 5-entrainer storage tank; 6-entrainer pump; 7-extraction kettle; 8-separation kettle.

### DETAILED DESCRIPTION OF THE EMBODIMENTS

The process of the disclosure is shown in Fig. 1, including successively connected carbon dioxide storage tank 1, condenser 2, carbon dioxide intermediate storage tank 3, carbon dioxide pump 4, extraction kettle 7 and separating kettle 6. The entrainer storage tank 5 is connected to the inlet of the extraction kettle 7 via the entrainer pump 6; and the inlet and outlet of each equipment are provided with valves.

The carbon dioxide is condensed by condenser and fed into carbon dioxide intermediate storage tank 3, and a refrigerant is fed into the jacket of the intermediate storage tank to keep low temperature in the tank. The carbon dioxide in the intermediate storage tank is metrically fed into the inlet of the extraction kettle 7 by the carbon dioxide pump 4. If the pure carbon dioxide is used as the critical flow medium, the valve of the entrainer storage tank 5 is closed. When the carbon dioxide needs to be modified, the valve of the entrainer storage tank is opened at the same time, and the entrainer is metrically fed into the inlet of the extraction kettle by entrainer pump 6. The top outlet of the extraction kettle is connected to the inlet of the separation kettle. The carbon dioxide separated by the separation kettle is returned to the intermediate storage tank for recycling.

The technical scheme of the disclosure is further illustrated by way of specific examples in conjunction with the process shown in fig. 1, but the scope of the disclosure is not limited thereto:

### Example 1

Loading the untreated latex sponge block with size of 0.5 m ×0.8 m ×0.1 m into a devolatilization kettle with volume of 10 L. Dynamic extraction was performed for 30 minutes at a temperature of 30 °C, a pressure of 6.0 MPa, and a CO₂ flow rate of 100 kg/h. Then slowly release the pressure of CO₂ to normal pressure to obtain the devolatilized latex sponge. And analyzing the content of the residual volatile organic compounds in the devolatilized latex sponge with HS-GC-MS and environmental chamber methods. The content of the total volatile organic compounds released in 24 hours was 35 µg/m³, in line with the relevant national standards. The total removal rate was greater than 99%, in which the release amount of styrene was 1.2 µg/m³, the content of 4-vinylcyclohexene was 1.0 µg/m³, the release amount of 1,3-butadiene was 0.9 µg/m³, complying with European Union standard.

### Example 2 (comparative)

Loading the untreated latex sponge block with size of 0.5 m ×0.8 m ×0.1 m into a devolatilization kettle with volume of 10 L. Dynamic extraction was performed for 15 minutes at a temperature of 40 °C, a pressure of 12 MPa, and a CO₂ flow rate of 100 kg/h. Then slowly release the pressure of CO₂ to normal pressure to obtain the devolatilized latex sponge. And analyzing the content of the residual volatile organic compounds in the devolatilized latex sponge with HS-GC-MS and environmental chamber methods. The content of the total volatile organic compounds released in 24 hours was 25 µg/m³, in line with the relevant national standards. The total removal rate was greater than 99%, in which the release amount of styrene was 0.4 µg/m³, the content of 4-vinylcyclohexene was 0.9 µg/m³, the release amount of 1,3-butadiene was 0.1 µg/m³, complying with European Union standard.

### Example 3 (comparative)

Loading the untreated latex sponge block with size of 0.5 m ×0.8 m ×0.1 m into a devolatilization kettle with volume of 10 L. Dynamic extraction was performed for 30 minutes at a temperature of 40 °C, a pressure of 12 MPa, and a CO₂ flow rate of 120 kg/h. Then slowly release the pressure of CO₂ to normal pressure to obtain the devolatilized latex sponge. And analyzing the content of residual volatile organic compounds in the devolatilized latex sponge with HS-GC-MS and environmental chamber methods. The content of the total volatile organic compounds released in 24 hours was 18 µg/m³, in line with the relevant national standards. The total removal rate was greater than 99%, in which the release amount of styrene was 0.4 µg/m³, the content of 4-vinylcyclohexene was 0.6 µg/m³, no1,3-butadiene was detected, complying with European Union standard.

### Example 4 (comparative)

Loading the untreated latex sponge block with size of 0.5 m ×0.8 m ×0.1 m into a devolatilization kettle with volume of 10 L. Dynamic extraction was performed for 30 minutes at a temperature of 45 °C, a pressure of 12 MPa, and a CO₂ flow rate of 120 kg/h. Then slowly release the pressure of CO₂ to normal pressure to obtain the devolatilized latex sponge. And analyzing the content of residual volatile organic compounds in the devolatilization latex sponge with HS-GC-MS and environmental chamber methods. The content of the total volatile organic compounds released in 24 hours was 12 µg/m³, in line with the relevant national standards. The total removal rate was greater than 99%, in which the release amount of styrene was 0.2 µg/m³, the content of 4-vinylcyclohexene was 0.2 µg/m³, no 1, 3-butadiene was detected, complying with European Union standard.

### Example 5 (comparative)

Loading the untreated latex sponge block with size of 0.5 m ×0.8 m ×0.1 m into a devolatilization kettle with volume of 10 L. Dynamic extraction was performed for 5 minutes at a temperature of 40 °C, a pressure of 20 MPa, and a CO₂ flow rate of 100 kg/h. Then slowly release the pressure of CO₂ to normal pressure to obtain the devolatilized latex sponge. And analyzing the content of the residual volatile organic compounds in the devolatilized latex sponge with HS-GC-MS and environmental chamber methods. The content of the total volatile organic compounds released in 24 hours was 15 µg/m³, in line with the relevant national standards. The total removal rate was greater than 99%, in which the release amount of styrene was 0.5 µg/m³, the content of 4-vinylcyclohexene was 0.6 µg/m³, no 1, 3-butadiene was detected, complying with European Union standard.

### Example 6

Loading the untreated latex sponge block with size of 0.5 m ×0.8 m ×0.1 m into a devolatilization kettle with volume of 10 L. Dynamic extraction was performed for 30 minutes at a temperature of 30° C, a pressure of 6 MPa, and a CO₂ flow rate of 120 kg/h. Then slowly release the pressure of CO₂ to normal pressure to obtain the devolatilized latex sponge. And analyzing the content of the residual volatile organic compounds in the devolatilized latex sponge with HS-GC-MS and environmental chamber methods. The content of the total volatile organic compounds released in 24 hours was 45 µg/m³, in line with the relevant national standards. The total removal rate was greater than 99%, in which the release amount of 2,4-toluenediamine was 2.0 µg/m³, the content of 4,4'-diaminodiphenylmethane was 1.8 µg/m³, complying with European Union standard.

### Example 7 (comparative)

Loading the untreated latex sponge block with size of 0.5 m ×0.8 m ×0.1 m into a devolatilization kettle with volume of 10 L. Dynamic extraction was performed for 15 minutes at a temperature of 40 °C, a pressure of 12 MPa, and a CO₂ flow rate of 100 kg/h. Then slowly release the pressure of CO₂ to normal pressure to obtain the devolatilized latex sponge. And analyzing the content of the residual volatile organic compounds in the devolatilized latex sponge with HS-GC-MS and environmental chamber methods. The total volatile organic compounds released in 24 hours was 35 µg/m³, in line with the relevant national standards. The total removal rate was greater than 99%, in which the release amount of 2,4-toluenediamine was 1.2µg/m³, the content of 4,4'-diaminodiphenylmethane was 1.0 µg/m³, complying with European Union standard.

### Example 8 (comparative)

Loading the untreated latex sponge block with size of 0.5 m ×0.8 m ×0.1 m into a devolatilization kettle with volume of 10 L. Dynamic extraction was performed for 30 minutes at a temperature of 40 °C, a pressure of 12 MPa, and a CO₂ flow rate of 120 kg/h. Then slowly release the pressure of CO₂ to normal pressure to obtain the devolatilized latex sponge. And analyzing the content of the residual volatile organic compounds in the devolatilized latex sponge with HS-GC-MS and environmental chamber methods. The content of the total volatile organic compounds released in 24 hours was 20 µg/m³, in line with the relevant national standards. The total removal rate was greater than 99%, in which the release amount of 2,4-toluenediamine was 0.9 µg/m³, the content of 4,4'-diaminodiphenylmethane was 0.8 µg/m³, complying with European Union standard.

### Example 9 (comparative)

Loading the untreated latex sponge block with size of 0.5 m ×0.8 m ×0.1 m into a devolatilization kettle with volume of 10 L. Dynamic extraction was performed for 30 minutes at a temperature of 45 °C, a pressure of 12 MPa, and a CO₂ flow rate of 120 kg/h. Then slowly release the pressure of CO₂ to normal pressure to obtain the devolatilized latex sponge. And analyzing the content of the residual volatile organic compounds in the devolatilized latex sponge with HS-GC-MS and environmental chamber methods. The content of the total volatile organic compounds released in 24 hours was 15 µg/m³, in line with the relevant national standards. The total removal rate was greater than 99%, in which the release amount of 2,4-toluenediamine releasing amount was 0.6 µg/m³, the content of 4,4'-diaminodiphenylmethane was 0.5 µg/m³, complying with European Union standard.

### Example 10 (comparative)

Loading the untreated latex sponge block with size of 0.5 m ×0.8 m ×0.1 m into a devolatilization kettle with volume of 10 L. Dynamic extraction for 5 minutes at a temperature of 40 °C, a pressure of 20 MPa, and a CO₂ flow rate of 100 kg/h. Then slowly release the pressure of CO₂ to normal pressure to obtain the devolatilized latex sponge. And analyzing the content of the residual volatile organic compounds in the devolatilized latex sponge with HS-GC-MS and environmental chamber methods. The content of the total volatile organic compounds released in 24 hours was 25 µg/m³, in line with the relevant national standards. The total removal rate was greater than 99%, in which the release amount of 2,4-toluenediamine was 1.2 µg/m³, the content of 4,4'-diaminodiphenylmethane was 0.8 µg/m³, complying with European Union standard.

The foregoing description is merely illustrative of specific embodiments of the present disclosure, and is not intended to limit the technical features of the present disclosure. Any change or modification made in the field of the disclosure by a skilled person in the relevant field should be deemed as within the scope of the present disclosure.

## Claims

1. A method of removing volatile organic compounds from a sponge by subcritical fluid, **characterized by** comprising:
placing a sponge block to be treated in an extraction kettle;
feeding a critical fluid medium into the extraction kettle;
performing extraction under a subcritical condition of the critical fluid medium;
releasing the pressure to normal pressure (atmosphere pressure) after the extraction is finished; and
separating the sponge and the medium to obtain a devolatilized sponge;
wherein the subcritical condition is: 20 °C≤temperature<31.1 °C, 3 MPa≤ pressure<7.39 MPa.

2. The method of claim 1, **characterized in that** the critical fluid medium is a pure carbon dioxide or a modified carbon dioxide.

3. The method of claim 2, **characterized in that** the modified carbon dioxide is formed by adding a modifier to the pure carbon dioxide in a proportion.

4. The method of claim 3, **characterized in that** the modifier is ethanol or isopropanol.

5. The method of claim 4, **characterized in that** the modifier is added in an amount of 0.5 to 20 wt.% of the mass of the pure carbon dioxide.

6. The method of claim 1, **characterized in that** an extraction time is from 5 to 30 minutes.

7. The method of claim 1, **characterized in that** the extraction is static or dynamic or a combination thereof.

8. The method of claim 1, **characterized in that** a separated carbon dioxide gas is returned to the extraction kettle for recycling.

## Patentansprüche

1. Verfahren zur Entfernung flüchtiger organischer Verbindungen aus einem Schwamm mittels eines unterkritischen Fluids, **dadurch gekennzeichnet, dass** es umfasst:
Platzieren eines zu behandelnden Schwammblocks in einen Extraktionskessel;
Zuführen eines kritischen flüssigen Mediums in den Extraktionskessel;
Durchführen einer Extraktion im unterkritischen Zustand des kritischen flüssigen Mediums,
Druckentlasten auf Normaldruck (Atmosphärendruck) nach Beendigung der Extraktion; und
Separieren des Schwamms und des Mediums, um einen entgasten Schwamm zu erhalten, wobei eine unterkritische Bedingung ist: 20 °C ≤ Temperatur<31,1 °C, 3 MPa ≤ Druck < 7,39 MPa.

2. Verfahren nach Anspruch 1, **dadurch gekennzeichnet, dass** das kritische flüssige Medium ein reines Kohlendioxid oder ein modifiziertes Kohlendioxid ist.

3. Verfahren nach Anspruch 2, **dadurch gekennzeichnet, dass** das modifizierte Kohlendioxid gebildet wird, indem ein Modifikator in einem bestimmten Verhältnis zu dem reinen Kohlendioxid hinzugefügt wird.

4. Verfahren nach Anspruch 3, **dadurch gekennzeichnet, dass** der Modifikator Ethanol oder Isopropanol ist.

5. Verfahren nach Anspruch 4, **dadurch gekennzeichnet, dass** der Modifikator in einer Menge von 0,5 bis 20 Gew.-% der Masse des reinen Kohlendioxids hinzugefügt wird.

6. Verfahren nach Anspruch 1, **dadurch gekennzeichnet, dass** eine Zeit der Extraktion 5 bis 30 Minuten beträgt.

7. Verfahren nach Anspruch 1, **dadurch gekennzeichnet, dass** die Extraktion statisch oder dynamisch oder eine Kombination davon ist.

8. Verfahren nach Anspruch 1, **dadurch gekennzeichnet, dass** ein separiertes Kohlendioxidgas zur Wiederverwendung in den Extraktionskessel zurückgeführt wird.

## Revendications

1. Procédé pour éliminer des composés organiques volatils d'une éponge par fluide sous-critique, **caractérisé en ce qu'**il comprend :
placer un bloc d'éponge à traiter dans une marmite d'extraction ;
introduire un milieu fluide critique dans la marmite d'extraction ;
effectuer une extraction dans des conditions sous-critiques du milieu fluide critique ;
relâcher la pression jusqu'à la pression normale (pression atmosphérique) une fois l'extraction terminée ; et
séparer l'éponge et le milieu pour obtenir une éponge dévolatilisée ;
dans lequel les conditions sous-critiques sont : 20 °C ≤ température<31,1 °C et 3 MPa≤ pression<7,39 MPa.

2. Procédé selon la revendication 1, **caractérisé en ce que** le milieu fluide critique est un dioxyde de carbone pur ou un dioxyde de carbone modifié.

3. Procédé selon la revendication 2, **caractérisé en ce que** le dioxyde de carbone modifié est formé en ajoutant un modificateur proportionnellement au dioxyde de carbone pur.

4. Procédé selon la revendication 3, **caractérisé en ce que** le modificateur est l'éthanol ou l'isopropanol.

5. Procédé selon la revendication 4, **caractérisé en ce que** le modificateur est ajouté dans une proportion de 0,5 à 20 % en masse par rapport à la masse du dioxyde de carbone pur.

6. Procédé selon la revendication 1, **caractérisé en ce que** le temps d'extraction est de 5 à 30 minutes.

7. Procédé selon la revendication 1, **caractérisé en ce que** l'extraction est statique ou dynamique ou une combinaison des deux.

8. Procédé selon la revendication 1, **caractérisé en ce qu'**un gaz de dioxyde de carbone séparé est renvoyé dans la marmite d'extraction pour recyclage.
